# DEMANDE DE BREVET EUROPEEN

(11) **EP 1 879 338 A1**
(43) Date de publication de la demande: **16.01.2008**
(21) Numéro de dépôt: 07013654.4
(22) Date de dépôt: 12.07.2007
(51) Int. Cl.: H04L 12/56

(54) **Système de téléphonie mobile directe**

(30) Priorité: 12.07.2006 FR 0606391
(71) Demandeur: Sagem Communication S.A., 75015 Paris (FR)
(72) Inventeur: Dorion-Cousinat, Marc, 69009 Lyon (FR); De Graeve, Frédéric, 75017 Paris (FR); Dumont, Jérémie, 91190 Gif Sur Yvette (FR)
(74) Mandataire: Maillet, Alain

(57) **Abrégé**

La présente invention concerne un procédé de gestion de collision d'accès aux ressources radio utilisées par une station mobile émettrice d'un appel d'un système de téléphonie mobile directe. Ledit système de téléphonie mobile directe est du type où l'utilisation en temps de chaque fréquence porteuse d'appel est divisée en intervalles de temps appelés *slots,* Lesdites ressources radio sont, en outre, constituées d'une fréquence sur laquelle ledit appel est émis et d'un *slot,* dit *slot* de synchronisation, dédié à l'émission, par ladite station mobile émettrice, d'une information de synchronisation qui permet aux stations mobiles se situant à sa portée de se synchroniser avec elle en temps. Ledit procédé est caractérisé en ce qu'il comporte
une sous-étape (101) de détermination aléatoire d'un temps d'émission correspondant au temps de début d'un *slot* de synchronisation,
dans le cas où ledit temps d'émission arrive à échéance, ladite sous-étape (101) de détermination aléatoire d'un temps d'émission est suivie par une sous-étape (102) d'émission de ladite information de synchronisation au cours dudit *slot* de synchronisation ainsi déterminé, et
dans le cas contraire, ladite sous-étape (101) de détermination d'un temps d'émission est suivie par une sous-étape (103) de détection de la réception d'une information de synchronisation, éventuellement émise par une autre station mobile au cours d'un *slot* de synchronisation.

## Description

La présente invention concerne un procédé de gestion de collision d'accès aux ressources radio nécessaires à l'émission d'appels par des stations mobiles d'un système de téléphonie mobile directe du type où l'utilisation en temps de chaque fréquence porteuse d'appel est divisée en intervalles de temps appelés *slots,* et où les stations moelles à portée les unes des autres sont synchronisées entre elles en temps. La présente invention concerne également une station mobile pourvue de moyens destinés à mettre en oeuvre ledit procédé et un système de téléphonie mobile directe dont les stations mobiles sont pourvues de moyens destinés à mettre en oeuvre ledit procédé.

Un système de téléphonie mobile directe est un système de téléphonie dans lequel chaque station mobile, dite station émettrice, est susceptible d'émettre un appel sur une fréquence et sur une zone géographique délimitée par la puissance dont elle dispose pour émettre les signaux relatifs à cet appel sur cette fréquence. Chaque station mobile qui n'émet pas un appel et qui se situe dans une zone géographique couverte par une station émettrice d'un appel, c'est-à-dire à portée de cette station émettrice, est alors susceptible d'écouter cet appel. Une telle station mobile est dite réceptrice.

Un système de téléphonie mobile directe est à opposer à un système de téléphonie cellulaire, entre autres, en terme de gestion des ressources radio. En effet, dans un système de téléphonie mobile directe, chaque station mobile s'alloue des ressources radio qui lui sont nécessaires pour émettre un appel, alors que dans un système de téléphonie cellulaire, tel que par exemple le système GSM (Global System for Mobile communication), chaque station mobile qui initie l'établissement d'un appel demande à une entité du réseau, en l'occurrence à la station de base à laquelle elle est rattachée, de lui fournir des ressources radio afin que l'appel qu'elle a initié soit établi.

Comme tout système de téléphonie, un système de téléphonie mobile directe requiert l'obtention de fréquences auprès d'organismes officiels qui garantissent que ces fréquences ne seront attribuées que pour ce type de système.

Du fait que la responsabilité de la gestion des ressources radio, et notamment de ces fréquences, soit déléguée aux stations mobiles, le problème de collision d'accès à ces ressources radio se pose dans les systèmes de téléphonie mobile directe. On peut noter que ce type de problème n'a pas lieu d'être dans le cas de système de téléphonie cellulaire dans lequel, répétons-le, la gestion des ressources radio pour une zone géographique dont l'étendue est déterminée lors de la planification du réseau cellulaire, est confiée à une seule entité responsable de la gestion de ces ressources radio pour cette zone géographique.

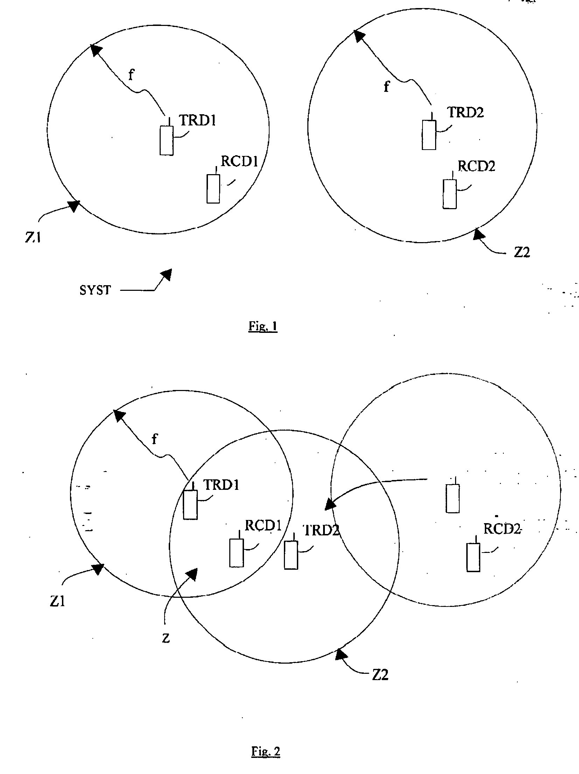

La Fig. 1 est un schéma d'un exemple de système de téléphonie mobile directe SYST. Le système de téléphonie SYST comporte, selon cet exemple, une première station mobile TRD1 émettrice sur une zone géographique Z1 d'un appel porté par une des fréquences attribuées f. Le système SYST comporte également une station mobile RCD1 qui, selon cet exemple, est réceptrice de l'appel émis par la station émettrice TRD1 du fait qu'elle se trouve à sa portée, c'est-à-dire qu'elle est située dans la zone géographique Z1. Enfin, selon cet exemple, le système SYST comporte une seconde station mobile TRD2 émettrice sur une zone géographique Z2 d'un autre appel porté par la même fréquence f et une station RCD2 réceptrice de l'appel émis par la station émettrice TRD2.

Selon cet exemple, les stations RCD1 et RCD2 reçoivent correctement les appels émis du fait que les zones géographiques Z1 et Z2 sont distinctes, Par contre, comme cela est illustré à la Fig. 2, dès que les stations émettrices TRD1 et TRD2 sont à portée l'une de l'autre et que des stations réceptrices se trouvent dans la zone Z d'intersection des zones géographiques Z1 et Z2, ces stations réceptrices subissent des interférences co-canal qui se traduisent par un brouillage de la réception des appels qu'elles sont en train d'écouter. Ainsi, selon l'exemple de la Fig. 2, la station RCD1 ne peut plus recevoir correctement l'appel émis par la station émettrice TRD1. Il y a alors apparition d'une collision d'accès aux ressources radio qui est due, selon cet exemple, à l'utilisation simultanée de la même fréquence f par les stations émettrices TRD1 et TRD2 à portée l'une de l'autre.

Le nombre de fréquences attribuées à un système de téléphonie mobile directe est généralement largement inférieur au nombre souhaité d'usagers susceptibles d'émettre des appels sur une même zone géographique. Afin d'augmenter la capacité d'émission simultanée d'appels sur une zone géographique donnée, certains systèmes de téléphonie mobile directe utilisent le principe de l'accès multiple par division de temps (Time Division Multiple Access).

Dans un système de téléphonie mobile à accès multiple par division de temps (TDMA), les données échangées sont transmises sous forme de données numériques dans des intervalles de temps (time slots). On utilisera le terme *slot* pour désigner un tel intervalle de temps car c'est le terme qui est utilisé par l'homme du métier. On l'écrira en italique pour toutefois marquer son origine anglo-saxonne.

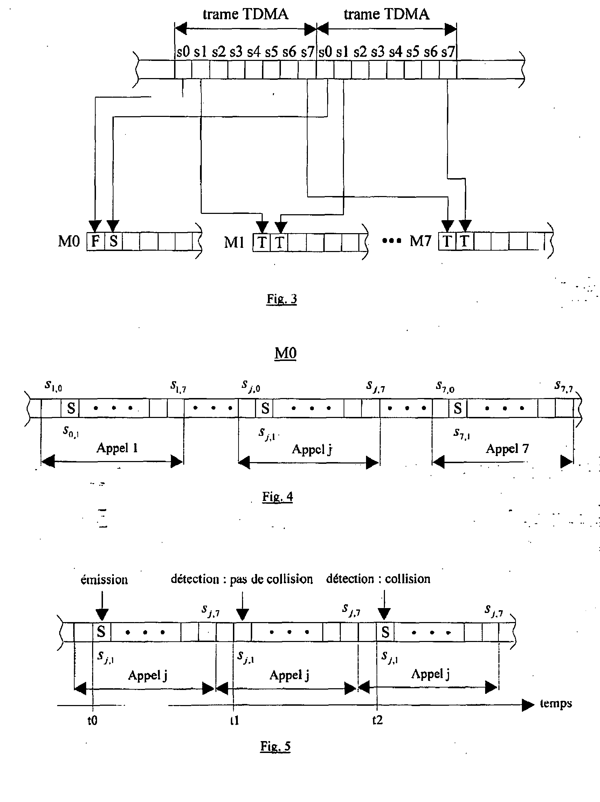

L'accès multiple par division de temps (TDMA) permet à différents usagers de partager, au cours du temps, l'utilisation de chaque fréquence attribuée, partage qui est défini par une trame dite trame TDMA qui fixe la disposition temporelle des *slots.* La trame TDMA est, dans le cas particulier d'un système GSM, un ensemble constitué de huit *slots* successifs notés s0 à s7 tel que représenté à la Fig. 3.

Une multitrame Mⱼ à NT *slots* de trames est une structure qui est souvent utilisée pour permettre de repérer un *slot* sur une échelle supérieure à la durée de la trame TDMA. Cette structure est définie sur une succession de *slots* sₖ d'un même rang donné **k** de NT trames TDMA successives. Comme illustrés à la Fig. 3, les *slots* s₀ de trames TDMA successives forment la multitrame M₀, les *slots* s₁ de trames successives forment la multitrame M₁, etc. On peut noter que seules deux trames TDMA successives sont représentées à la Fig. 3 alors qu'une multitrame M₀, par exemple est généralement constituée de 51 *slots* s₀ et que les multitrames Mⱼ (j≠0) sont généralement constituées de 26 *slots* sⱼ.

L'accès multiple par division de temps impose que les stations mobiles qui utilisent une même fréquence attribuée et qui se situent à portée les unes des autres soient synchronisées entre elles en temps afin qu'un *slot* sⱼ (j≠0) dédié à l'émission des données utiles d'un appel (marqués T à la Fig. 3) par une de ces stations ne chevauche pas le *slot* suivant qui serait dédié à l'émission des données utiles d'un autre appel par une autre de ces stations mobiles.

La multitrame M₀ de chaque fréquence attribuée est souvent réservée pour l'émission d'informations relatives au fonctionnement du système de téléphonie mobile directe et notamment pour l'émission d'une information de calage en fréquence (marquée F à la Fig. 3), qui permet à chaque station mobile réceptrice d'un appel de se caler sur la fréquence de la station émettrice de cet appel, et d'une information de synchronisation (marquée S à la Fig. 3) qui permet aux stations émettrices d'appel qui se situent à portée les unes des autres de se synchroniser entre elles en temps. On peut noter que les autres multitrames Mⱼ (j≠0) de chaque fréquence sont réservées pour l'émission des données utiles d'autres appels sur cette fréquence.

Le problème de collision d'accès aux ressources radio nécessaires pour l'émission d'un appel peut se produire également lors de l'établissement de cet appel par une station mobile. En effet, selon l'exemple de la Fig. 2, supposons que la station RCD1, jusque là réceptrice d'un appel, devienne émettrice d'un nouvel appel. Pour cela, la station RCD1 doit basculer dans le mode émission et s'allouer des ressources radio. Ces deux actions demandant un certain temps de latence pour l'établissement de cet appel, il peut se produire le cas où, pendant ce temps de latence, une autre station émettrice (non représentée à la Fig. 2), jusque là hors de portée de la station RCD1, vienne sous sa portée et que les ressources radio que la station RCD1 s'est allouées, et notamment le *slot* de fréquence dédié à l'émission des données utiles de l'appel, soient communes aux ressources radio utilisées par cette autre station émettrice. Une zone d'interférences co-canal se produit alors qui perturbe à la fois l'appel émis par cette autre station émettrice et l'appel de la station RCD1 devenue émettrice.

Le problème résolu par la présente invention est donc de prévoir un système de téléphonie mobile directe qui permet de gérer les collisions d'accès aux ressources radio nécessaires à l'émission d'appels par des stations mobiles d'un système de téléphonie mobile directe du type où les stations mobiles à portée les unes des autres sont synchronisées entre elles en temps, c'est-à-dire qu'elles partagent une même information de synchronisation qui leur permet d'être synchronisées entre elles en temps.

A cet effet, l'invention concerne un système de téléphonie mobile directe tel que décrit ci-dessus qui est caractérisé en ce que chaque station mobile comporte des moyens pour détecter une collision d'accès aux ressources radio.

Dans un système de téléphonie mobile à accès multiple par division de temps, les ressources radio nécessaires à l'émission d'un appel sont en outre constituées d'une fréquence attribuée sur laquelle l'appel est émis, d'un *slot* de la trame TDMA au cours duquel les données utiles, c'est-à-dire les données de voix, sont envoyées et d'un *slot* de la multitrame M₀, dit *slot* de synchronisation, au cours duquel l'information de synchronisation est envoyée.

Selon un mode de réalisation de la présente invention correspondant à un système de téléphonie mobile directe à accès multiple par division de temps, chaque station mobile alors pourvue des moyens pour détecter une collision d'accès aux ressources radio est adaptée à déterminer aléatoirement un temps d'émission correspondant au début d'un *slot* de synchronisation, à émettre ladite information de synchronisation au cours du *slot* de synchronisation ainsi déterminé et adaptée, lorsqu'elle n'émet pas l'information de synchronisation, à détecter si une information de synchronisation est reçue au cours de chaque *slot* de synchronisation.

Ainsi, lorsqu'une station émettrice parmi une pluralité de stations émettrices synchronisées entre elles en temps reçoit une information de synchronisation sur le *slot* de synchronisation qui correspond au *slot* qu'elle utilise pour envoyer son information de synchronisation, cette station mobile détecte une collision d'accès aux ressources radio qu'elle s'est allouées.

Selon la présente invention, chaque station mobile d'un système de téléphonie mobile directe comporte également des moyens pour corriger une collision d'accès aux ressources radio.

Selon un mode de réalisation de la présente invention, lesdits moyens pour corriger une collision d'accès aux ressources radio permettent à ladite station mobile de rechercher de nouvelles ressources radio, de désallouer les ressources radio qu'elle s'est allouées et de s'allouer lesdites nouvelles ressources radio pour l'émission de son appel.

Selon une variante de ce mode de réalisation, la station mobile émettrice comporte également des moyens pour rechercher des ressources radio disponibles et des moyens pour sélectionner parmi lesdites ressources radio disponibles lesdites nouvelles ressources.

Selon un mode de réalisation de la présente invention correspondant au cas où le système de téléphonie mobile directe est du type à accès multiple par division de temps, lesdits moyens pour rechercher des ressources radio disponibles permettent à ladite station mobile d'inspecter au moins une des fréquences attribuées audit système de téléphonie mobile directe de manière à déterminer si au moins un *slot* n'est pas déjà utilisé pour l'émission d'appel sur cette fréquence.

La présente invention concerne également un procédé de gestion de collision d'accès aux ressources radio utilisées par une station mobile émettrice d'un appel d'un système de téléphonie mobile précédemment décrit. Ledit procédé, qui est destiné à être exécuté par chaque station mobile dudit système, est caractérisé en ce qu'il comporte une sous-étape de détermination aléatoire d'un temps d'émission correspondant au temps de début d'un *slot* de synchronisation relatif aux ressources radio que ladite station mobile s'est allouées pour l'émission de son appel . Dans le cas où ce temps d'émission arrive à échéance, la sous-étape de détermination aléatoire d'un temps d'émission est suivie par une sous-étape d'émission de l'information de synchronisation au cours dudit *slot* de synchronisation ainsi déterminé. Dans le cas contraire, ladite sous-étape de détermination aléatoire d'un temps d'émission est suivie par une sous-étape de détection de la réception d'une information de synchronisation, éventuellement émise par une autre station mobile au cours d'un *slot* de synchronisation.

Le procédé est également caractérisé en ce qu'il comporte une étape de correction de collision d'accès aux ressources radio destinée à être exécutée par une station émettrice d'un appel qui détecte une telle collision d'accès au cours de ladite étape de détection de collision d'accès aux ressources radio.

Selon un mode de réalisation du procédé, au cours de ladite étape de correction de collision d'accès aux ressources radio utilisées pour son appel par ladite station émettrice, les ressources radio provoquant la collision d'accès sont désallouées et de nouvelles ressources radio sont alors allouées pour l'émission dudit appel.

Selon un autre mode de réalisation du procédé, au cours de ladite étape de correction de collision d'accès aux ressources radio utilisées pour son appel par ladite station émettrice, de nouvelles ressources radio sont allouées pour l'émission de son appel et les ressources radio provoquant la collision d'accès sont alors désallouées.

Selon une variante de ces deux modes de réalisation, ladite étape de correction de collision d'accès aux ressources radio comporte, en outre, une sous-étape de recherche de ressources radio disponibles, lesdites nouvelles ressources radio allouées étant alors choisies parmi lesdites ressources radio disponibles.

Selon un mode de réalisation de ladite variante, au cours de ladite sous-étape de recherche de ressources radio disponibles, au moins une fréquence attribuée audit système de téléphonie mobile directe est inspectée de manière à déterminer si au moins un *slot* n'est pas déjà utilisé pour l'émission d'appels sur cette fréquence.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est un schéma d'un exemple de système de téléphonie directe,
la Fig. 2 est un schéma qui illustre le problème de collision d'accès aux ressources radio nécessaires à l'émission d'appel,
la Fig. 3 est un schéma d'un exemple de trame TDMA du système GSM,
la Fig. 4 représente un exemple d'un mécanisme de diffusion d'information de synchronisation basé sur le concept de voie balise issu des normes GSM.
la Fig. 5 est un chronogramme d'un exemple illustrant la détection de collision d'accès selon un mode de réalisation de la présente invention,
la Fig. 6 est un diagramme des étapes du procédé de gestion de collision d'accès selon la présente invention, et
la Fig.7 est un schéma d'une station mobile selon la présente invention.

Dans la suite de la description, la présente invention est décrite dans le cas particulier d'un système de téléphonie mobile directe du type à accès multiple par division de temps qui est l'exemple le plus connu de système de téléphonie mobile directe du type où les stations mobiles à portée les unes des autres sont synchronisées entre elles en temps. Cependant, la présente invention n'est pas limitée à ce type de système de téléphonie mobile directe.

Dans un système de téléphonie mobile directe à accès multiple par division de temps, qui a été décrit dans la partie introductive, il est nécessaire de prévoir un mécanisme de diffusion d'une information de synchronisation S qui permet à des stations à portée les unes des autres de se synchroniser entre elles en temps que ces stations soient émettrices ou réceptrices d'un appel.

La Fig. 4 représente un exemple d'un tel mécanisme basé sur le concept de voie balise issu des normes GSM.

Selon cet exemple, la multitrame M₀ de chaque fréquence attribuée au système de téléphonie mobile directe est dédiée, en outre, à l'émission de l'information de synchronisation S. La multitrame M₀ est généralement une multitrame à 51 *slots* de trames. Selon cet exemple, sept appels peuvent être simultanément portés par chaque fréquence attribuée. Les ressources radio nécessaires à l'émission de chacun de ces sept appels Aⱼ (j=1 à 7) sont en outre constituées de la même fréquence porteuse, d'un *slot* sⱼ de la trame TDMA à partir duquel une multitrame Mⱼ est formée, généralement une multitrame à 26 *slots* de trame (non représentée sur la Fig. 4), et de sept *slots* s_{j,k} (k=1 à 7) de la multitrame M₀.

Toujours selon cet exemple, le *slot* s_{j,1} est le *slot* de synchronisation au cours duquel l'information de synchronisation S est envoyée par la station émettrice TRDj de l'appel Aⱼ et les autres *slots* s_{j,k} (k≠1) sont réservés pour l'émission d'autres informations relatives au fonctionnement du système de téléphonie mobile directe.

Une telle définition de la multitrame M₀ permet donc que la même information de synchronisation S soit connue, en particulier, des stations mobiles émettrices d'appel sur une même fréquence attribuée. Ainsi, les stations émettrices d'appel sur la même fréquence émettent toutes l'information de synchronisation S sur le *slot* de synchronisation s_{j,1} relatif à l'appel Aⱼ que chacune de ces stations émet.

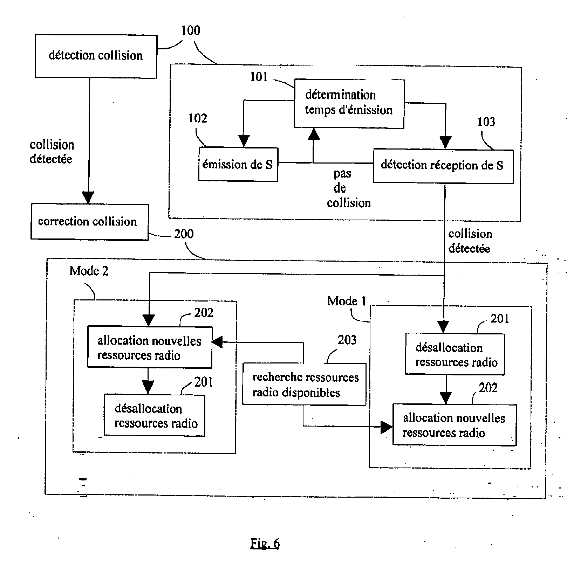

La Fig. 5 est un chronogramme d'un exemple illustrant la détection de collision d'accès selon un mode de réalisation de la présente invention correspondant au cas où le système de téléphonie mobile est du type à accès multiple par division de temps.

Sur ce chronogramme, l'état du *slot* de synchronisation s_{j,1} relatif à un appel Aⱼ de la multitrame M₀ est représenté tel qu'il est vu par la station mobile émettrice TRDj de l'appel Aⱼ à trois instants successifs t0, t1 et t2.

Selon la présente invention, la station mobile TRDj émettrice de l'appel Aj sur la fréquence relative à la multitrame M₀ détermine aléatoirement un temps auquel elle émet l'information de synchronisation S. Ce temps correspond au début d'un *slot* de synchronisation s_{j,1}. Supposons que ce temps est le temps t0. Une fois cette information de synchronisation S envoyée, la station émettrice TRDj détermine à nouveau de manière aléatoire un autre temps auquel elle émettra à nouveau l'information de synchronisation S. Supposons que ce temps, non représenté sur la Fig. 5, est supérieur au temps t2, la station mobile TRDj détecte alors aux temps t1 et t2, pendant la durée du *slot* de synchronisation s_{1,j}, si une information de synchronisation S est reçue. Selon cet exemple, au temps t1, la station mobile détecte qu'une information de synchronisation S n'est pas présente dans le *slot* de synchronisation s_{j,1}. Elle en déduit alors qu'aucune station mobile émettrice d'appel à sa portée n'utilise les mêmes ressources radio qu'elle-même utilise pour l'émission de son appel Aⱼ. Au temps t2, la station mobile TRDj détecte par contre qu'une information de synchronisation S est présente. Elle en déduit alors qu'une station mobile émettrice d'un appel située à sa portée utilise les mêmes ressources radio, c'est-à-dire que cette station à portée émet les données utiles de son appel sur la même fréquence et au cours du même *slot* sⱼ de la trame TDMA. Une collision d'accès aux ressources radio est alors détectée par la station mobile émettrice de l'appel Aⱼ.

Dans ce cas, la station mobile TRDj corrige cette collision d'accès ainsi détectée grâce à des moyens de correction de collision d'accès aux ressources radio dont elle est pourvue.

Selon un mode de réalisation d'une telle station mobile, cette station mobile TRDj est adaptée à rechercher de nouvelles ressources radio, en l'occurrence un autre *slot* sₘ pour émettre les données utiles de son appel et un autre *slot* de synchronisation s_{m,1} sur la même fréquence ou éventuellement sur une autre fréquence attribuée, à désallouer les ressources radio, en l'occurrence le *slot* sⱼ de la trame TDMA et le *slot* de synchronisation s_{j,1} qu'elle s'était alloué et à s'allouer lesdites nouvelles ressources radio pour l'émission de son appel.

Selon une variante de ce mode de réalisation, la station mobile émettrice TRDj comporte également des moyens pour rechercher des ressources radio disponibles et des moyens pour sélectionner, parmi lesdites ressources radio disponibles, lesdites nouvelles ressources.

Selon un mode de réalisation d'une station mobile TRDj pourvue de moyens pour rechercher des ressources radio disponibles, ladite station mobile TRDj est adaptée à inspecter au moins une des fréquences attribuées audit système de téléphonie, de manière à déterminer si au moins un *slot* n'est pas déjà utilisé pour l'émission d'appels sur cette fréquence.

Ainsi, par exemple, la station mobile TRDj peut essayer de déterminer, en premier lieu, si au moins un *slot* est libre d'appel sur la fréquence qu'elle utilisait jusque là pour l'émission de son appel Aⱼ, et, dans le cas où tous les *slots* sont utilisés par ailleurs pour l'émission d'appel, elle inspecte d'autres fréquences attribuées.

La Fig. 6 est un diagramme des étapes du procédé de gestion de collision d'accès selon la présente invention.

Ledit procédé, qui est destiné à être exécuté par chaque station mobile TRDj du système SYST, est caractérisé en ce qu'il comporte en outre une étape 100 de détection de collision d'accès aux ressources radio.

Le procédé, selon un mode de réalisation de la présente invention, est destiné à être mis en oeuvre par chaque station mobile TRDi utilisée dans un système de téléphonie mobile directe à accès multiple par division de temps, c'est-à-dire un système dans lequel les ressources radio nécessaires pour l'émission d'un appel Aⱼ sont, en outre, constituées d'une fréquence f sur laquelle l'appel Aⱼ est émis, d'un *slot* sⱼ de la trame TDMA au cours duquel les données utiles relatives à l'appel Aⱼ sont envoyées et d'un *slot* de synchronisation s_{j,1} de la multitrame M₀, au cours duquel une information de synchronisation S est envoyée.

Ladite étape de détection de collision d'accès aux ressources radio comporte alors, selon ce mode de réalisation, une sous-étape 101 de détermination aléatoire d'un temps d'émission correspondant au temps de début d'un *slot* de synchronisation s_{j,1}, Dans le cas où ce temps d'émission arrive à échéance, ladite sous-étape 101 est suivie par une sous-étape 102 d'émission de l'information de synchronisation S au cours du *slot* de synchronisation s_{j,1} ainsi déterminé. Dans le cas contraire, c'est-à-dire dans le cas où la station mobile n'émet pas l'information de synchronisation S au cours du *slot* de synchronisation s_{j,1} ainsi déterminé, ladite sous-étape 101 est suivie par une sous-étape 103 de détection de la réception d'une information de synchronisation S éventuellement émise par une autre station mobile au cours d'un *slot* de synchronisation s_{j,1}. Si une telle information S est reçue au cours d'un *slot* de synchronisation s_{j,1}, une collision d'accès aux ressources radio est alors détectée.

Dans le cas où une détection de collision est détectée par la station mobile TRDj, le procédé est également caractérisé en ce que ladite étape 100 est suivie d'une étape 200 de correction de collision d'accès aux ressources radio.

Selon un mode de réalisation du procédé, correspondant au mode 1 à la Fig. 6, au cours de ladite étape 200 de correction de collision d'accès aux ressources radio, les ressources radio provoquant la collision d'accès, en l'occurrence le *slot* sⱼ utilisé pour l'émission des données utiles de l'appel A*ⱼ* et le *slot* de synchronisation s_{j,1}, sont désallouées (sous-étape 201) et de nouvelles ressources radio sont alors allouées (sous-étape 202) pour l'émission de l'appel par la station mobile TRDj. On rappelle ici que la désallocation et l'allocation de ressources radio pour l'émission d'un appel sont gérées par la station mobile émettrice de cet appel.

Selon un autre mode de réalisation du procédé, correspondant au mode 2 à la Fig. 6, au cours de l'étape 200 de correction de collision d'accès aux ressources radio, de nouvelles ressources radio sont allouées (sous-étape 202) par la station émettrice TRDj pour l'émission de son appel et les ressources radio provoquant la collision d'accès sont alors désallouées (sous-étape 201).

Selon une variante de ces deux modes de réalisation, l'étape 200 de correction de collision d'accès aux ressources radio comporte, en outre, une sous étape 203 de recherche de ressources radio disponibles, lesdites nouvelles ressources radio allouées étant alors choisies parmi lesdites ressources radio disponibles.

Selon un mode de réalisation de ladite variante, au cours de ladite sous-étape 203 de recherche de ressources radio disponibles, au moins une fréquence attribuée audit système de téléphonie mobile directe est inspectée de manière à déterminer si au moins un *slot* n'est pas déjà utilisé pour l'émission d'appel sur cette fréquence.

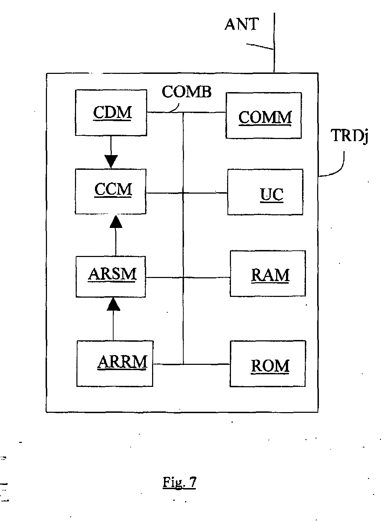

La Fig. 7 représente un schéma d'une station mobile TRDj selon la présente invention d'un système de téléphonie mobile directe du type où les stations mobiles à portée les unes des autres sont synchronisées entre elles en temps. La station mobile TRDj, qui est de manière non limitative un téléphone ou un ordinateur portable, comporte un bus de communication COMB auquel sont reliés une unité centrale UC, une mémoire non volatile ROM, une mémoire vive RAM, des moyens COMM de communication radio-fréquence et une antenne ANT.

La mémoire non volatile ROM mémorise les programmes mettant en oeuvre l'invention tel que l'algorithme décrit en référence à la Fig. 6. La mémoire non volatile ROM est par exemple un disque dur. De manière plus générale, les programmes selon la présente invention sont mémorisés dans un moyen de stockage. Ce moyen de stockage est lisible par un ordinateur ou un microprocesseur. Ce moyen de stockage est intégré ou non à la station mobile TRj, et peut être amovible. Lors de la mise sous tension de la station mobile Trj, les programmes sont transférés dans la mémoire vive RAM qui contient alors le code exécutable de l'invention ainsi que les données nécessaires à la mise en oeuvre de l'invention.

La station mobile TRj est également équipée de moyens CDM, qui peuvent être de manière non limitative un programme d'ordinateur, pour détecter une collision d'accès aux ressources radio.

Selon un mode de réalisation de la présente invention qui correspond au cas d'un système de téléphonie mobile à accès multiples par division de temps, c'est-à-dire correspondant au cas où les ressources radio nécessaires pour l'émission d'un appel Aⱼ sont, en outre, constituées d'une fréquence attribuée f sur laquelle l'appel est émis et d'un *slot* de synchronisation s_{j,1} de la multitrame M₀ au cours duquel une information de synchronisation S est envoyée, la station mobile TRDj, émettrice d'un appel Aⱼ, sur une fréquence attribuée f et pourvue des moyens CDM, est adaptée à déterminer aléatoirement un temps d'émission correspondant au temps de début d'un *slot* de synchronisation s_{j,1}, à émettre une information de synchronisation S par les moyens COMM et l'antenne ANT au cours dudit *slot* de synchronisation s_{j,1} ainsi déterminé, est adaptée, lorsqu'elle n'émet pas l'information de synchronisation S, à détecter si une information de synchronisation est reçue par l'antenne ANT et les moyens COMM au cours d'un *slot* de synchronisation s_{j,1}.

Selon un mode de réalisation de la présente invention, la station mobile TRDj comporte également des moyens CCM, qui peuvent être de manière non limitative un programme d'ordinateur, pour corriger une collision d'accès aux ressources radio qui permettent à la station mobile TRDj de rechercher de nouvelles ressources radio, de désallouer les ressources radio qu'elle s'est allouées ct de s'allouer lesdites nouvelles ressources radio pour l'émission de son appel.

Selon une variante de ce mode de réalisation, la station mobile émettrice TRDj comporte également des moyens ARRM, qui peuvent être de manière non limitative un programme d'ordinateur, pour rechercher des ressources radio disponibles et des moyens ARSM, qui peuvent également être de manière non limitative un programme d'ordinateur, pour sélectionner parmi lesdites ressources radio disponibles lesdites nouvelles ressources.

Selon un mode de réalisation de la présente invention correspondant au cas où le système de téléphonie mobile directe cst du type à accès multiple par division de temps, lesdits moyens ARRM permettent à la station mobile TRDj d'inspecter au moins une des fréquences attribuées f audit système de téléphonie mobile directe de manière à déterminer si au moins un *slot* n'est pas déjà utilisé pour l'émission d'appels sur cette fréquence.

## Revendications

1. Procédé de gestion de collision d'accès aux ressources radio utilisées par une station mobile émettrice d'un appel d'un système de téléphonie mobile directe, ledit système de téléphonie mobile directe étant du type où l'utilisation en temps de chaque fréquence porteuse d'appel est divisée en intervalles de temps appelés *slots,* lesdites ressources radio comportant, en outre, un *slot,* dit *slot* de synchronisation, dédié à l'émission, par ladite station mobile émettrice, d'une information de synchronisation qui permet aux stations mobiles se situant à sa portée de se synchroniser avec elle en temps, **caractérisé en ce qu'**il comporte
une sous-étape (101) de détermination aléatoire d'un temps d'émission correspondant au temps de début d'un *slot* de synchronisation,
dans le cas où ledit temps d'émission arrive à échéance, ladite sous-étape (101) de détermination aléatoire d'un temps d'émission est suivie par une sous-étape (102) d'émission de ladite information de synchronisation au cours dudit *slot* de synchronisation ainsi déterminé, et
dans le cas contraire, ladite sous-étape (101) de détermination d'un temps d'émission est suivie par une sous-étape (103) de détection de la réception d'une information de synchronisation éventuellement émise par une autre station mobile au cours d'un *slot* de synchronisation, une collision d'accès étant alors détectée dès qu'une information de synchronisation est reçue au cours dudit *slot* de synchronisation.

2. Procédé de gestion de collision d'accès aux ressources radio selon la revendication 1, **caractérisé en ce qu'**il comporte une étape (200) de correction d'une collision d'accès aux ressources radio.

3. Procédé de gestion de collision d'accès aux ressources radio selon la revendication 2, **caractérisé en ce qu'**au cours de ladite étape (200) de correction de collision d'accès aux ressources radio, les ressources radio préalablement allouées pour l'émission de l'appel par ladite station mobile émettrice sont désallouées (201) et de nouvelles ressources radio sont alors allouées (202) pour l'émission dudit appel.

4. Procédé de gestion de collision d'accès aux ressources radio selon la revendication 2, **caractérisé en ce qu'**au cours de ladite étape (200) de correction de collision d'accès aux ressources radio, de nouvelles ressources radio sont allouées (202) pour l'émission de l'appel émis par la dite station mobile émettrice et les ressources radio allouées pour l'émission dudit appel sont alors désallouées (201).

5. Procédé de gestion de collision d'accès aux ressources radio selon les revendications 2 à 4, **caractérisé en ce que** ladite étape (200) de correction de collision d'accès aux ressources radio comporte, en outre, une sous étape (203) de recherche de ressources radio disponibles, lesdites nouvelles ressources radio allouées étant alors choisies parmi lesdites ressources radio disponibles.

6. Procédé de gestion de collision d'accès aux ressources radio selon la revendication 5, **caractérisé en ce que**, au cours de ladite sous-étape (203) de recherche de ressources radio disponibles, au moins une fréquence attribuée audit système de téléphonie mobile directe est inspectée de manière à déterminer si au moins un *slot* n'est pas déjà utilisé pour l'émission d'appel sur cette fréquence.

7. Station mobile destinée à être utilisée dans un système de téléphonie mobile directe du type où l'utilisation en temps de chaque fréquence porteuse d'appel est divisée en intervalles de temps appelés *slots,* lesdites ressources radio étant, en outre, constituées d'une fréquence sur laquelle ledit appel est émis et d'un- *slot,* dit de synchronisation, dédié à l'émission, par ladite station mobile, d'une information de synchronisation qui permet aux stations mobiles se situant à sa portée de se synchroniser avec elle en temps, **caractérisée en ce qu'**elle est adaptée à déterminer aléatoirement un temps d'émission correspondant au temps de début d'un *slot* de synchronisation, à émettre ladite information de synchronisation au cours dudit *slot* de synchronisation ainsi déterminé, est adaptée, lorsqu'elle n'émet pas ladite information de synchronisation, à détecter si une information de synchronisation est reçue au cours d'un *slot* de synchronisation.

8. Station mobile selon la revendication 7, **caractérisée en ce qu'**elle comporte également des moyens pour corriger une collision d'accès aux ressources radio.

9. Station mobile selon la revendication 8, **caractérisée en ce que** lesdits moyens pour corriger une collision d'accès aux ressources radio permettent à ladite station mobile de rechercher de nouvelles ressources radio, de désallouer les ressources radio qu'elle s'est allouées et de s'allouer lesdites nouvelles ressources radio pour l'émission de son appel.

10. Station mobile selon la revendication 8 ou 9, **caractérisée en ce qu'**elle comporte également des moyens pour rechercher des ressources radio disponibles et des moyens pour sélectionner, parmi lesdites ressources radio disponibles lesdites nouvelles ressources.

11. Station mobile selon la revendication 10, **caractérisée en ce que** lesdits moyens pour rechercher des ressources radio disponibles permettent à ladite station mobile d'inspecter au moins une des fréquences attribuées audit système de téléphonie mobile directe dé manière à déterminer si au moins un *slot* n'est pas déjà utilisé pour l'émission d'appel sur cette fréquence.

12. Système de téléphonie mobile directe, **caractérisé en ce que** chacune des stations mobiles susceptibles d'émettre un appel est conforme à l'une des revendications 7 à 12.

13. Programme d'ordinateur stocké sur un support d'informations, **caractérisé en ce qu'**il comporte des instructions permettant de mettre en oeuvre le procédé selon l'une des revendications 1 à 6, lorsqu'il est chargé et exécuté par une station mobile d'un système de téléphonie mobile directe.
